(19) Europäisches Patentamt / European Patent Office / Office européen des brevets

(11) **EP 4 517 261 A1**

(12) **EUROPEAN PATENT APPLICATION**

(43) Date of publication:
05.03.2025 Bulletin 2025/10

(21) Application number: 23194404.2

(22) Date of filing: **30.08.2023**

(51) International Patent Classification (IPC):
*G01C 21/00* *(2006.01)*

(52) Cooperative Patent Classification (CPC):
**G01C 21/3889;** G01C 21/3848; G06V 20/58

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLKSWAGEN AG**
**38440 Wolfsburg (DE)**

(72) Inventors:
• **Plachetka, Christopher**
**38458 Velpke (DE)**
• **Fricke, Jenny**
**38118 Braunschweig (DE)**

(54) **METHOD FOR EVALUATING A DIGITAL MAP ONBOARD OF A VEHICLE, SYSTEM AND VEHICLE**

(57) The present invention is related to a method for evaluating a digital map onboard of a vehicle. Sensor data representing a vehicle environment of the vehicle (30) are received (10) from a sensor (S) implemented in the vehicle. Furthermore, map data of a digital map stored in the vehicle are received (11). The sensor data and the map data are analysed (12) for deviations between the sensor data and the map data and an evaluation state is determined (12) for at least one map item based on the result of the analysis. A probability that the digital map correctly represents real-world objects in the vehicle environment is calculated (13) based on the evaluation state.

Fig. 4

40 $P(s_m=VER|\hat{s}_m=VER)$

41 $P_{vis}(s_m=DEL|\hat{s}_m=DEL)$

42 $P_{occ}(s_m=DEL)$

43 $P(s_M=VER)$

EP 4 517 261 A1

**Description**

The present invention is related to a method for evaluating a digital map onboard of a vehicle, in particular for supporting autonomous or semi-autonomous operation of vehicles. The invention is further related to a corresponding system and a vehicle, which make use of such a method or system.

The autonomous or semi-autonomous operation of vehicles depends on the availability of reliable high-definition (HD) map data. This map data provides the vehicle with information relevant for the automatic driving function, for example with information on lanes for trajectory planning or on pedestrian crossings for predicting behavior of pedestrians near the lanes ahead of the vehicle.

However, the map data may be outdated since its creation due to changes in the environment that have occurred in the meantime. For example, there may be permanent changes due to road construction measures or temporary changes due to a construction site. In addition, map data may already be incorrect at the time of creation, for example, due to errors in the processing of the underlying data during map creation by a map supplier. When a vehicle travels in an area with such outdated or incorrect map data, map deviations between a map with the respective map data stored in the vehicle and the real vehicle environment occur. If the deviations remain undetected, the vehicle and its occupants may be endangered, as incorrect assumptions about the environment may be processed by the vehicle's automated driving function or other subsystems.

While driving, the vehicle can verify parts of the map that have been traveled on the one hand and also detect deviations on the other. In the case of a verification, the map then corresponds to the real vehicle environment. However, errors can occur, such as an incorrect verification or an unseen deviation, e.g., due to a decreased performance of the vehicle sensor system in case of bad weather conditions. Similarly, occlusion effects may occur so that parts of the map corresponding to the environment cannot be detected by the vehicle sensor system and therefore cannot be verified.

Methods are already known to evaluate the environment of a vehicle in real time while driving. For example, WO 2022/096236 A1 discloses a method for determining a probability of existence of a possible element in the surroundings of a motor vehicle. Map data of the surroundings and sensor data are compared with respect to the presence of the possible element and a probability of existence is determined as a function of a result of the comparison.

It is an object of the present invention to provide improved solutions for the operation of automated vehicles in case of maps presumably deviating from the real world environment.

This object is achieved by a method for evaluating a digital map onboard of a vehicle according to claim 1, a corresponding system according to claim 13, and a vehicle according to claim 15.

The dependent claims include advantageous further developments and improvements of the present principles as described below.

According to a first aspect, a method for evaluating a digital map onboard of a vehicle comprises:

receiving, from a sensor implemented in the vehicle, sensor data representing a vehicle environment of the vehicle;
receiving map data of a digital map stored in the vehicle;
analysing the sensor data and the map data for deviations between the sensor data and the map data;
determining for at least one map item an evaluation state based on the result of the analysis; and
calculating a probability that the digital map correctly represents real-world objects in the vehicle environment based on the evaluation state.

In this way, the method according to the invention provides a safety evaluation of the onboard map of a vehicle while driving, which may allow for a continued operation of the driving function in challenging driving conditions, where only parts of the map can be verified.

In an advantageous embodiment determining the evaluation state comprises a classification into one of three possible evaluation states for the at least one map item.

In a further advantageous embodiment, the possible evaluation states correspond to

- a verified state in case a map item correctly represents a corresponding real-world object in the vehicle environment;
- a falsified state in case a map item does not correctly represent a corresponding real-world object in the vehicle environment; and
- a missing state in case no map item exists in the map for a real-world object in the vehicle environment.

In a further advantageous embodiment the deviations result from one or more of an impaired detection of the real-world objects in the vehicle environment by the sensor implemented in the vehicle or an imperfect performance of an algorithm for analysing the sensor data and the map data for deviations.

In particular, the impaired detection of the real-world objects in the vehicle environment may result from an occlusion of the real-world objects or weather conditions negatively influencing the performance of the sensor.

In a further advantageous embodiment a map trust value is determined based on the probability that safety-critical map items relevant for safe completion of the vehicle's intended behavior have been correctly verified.

This allows for a safe operation of the vehicle in challenging driving conditions, whereby the risk of such operation is known. Furthermore, the balancing of accepted risk due to a continued operation and disengagements of the driving function is enabled. Also, by considering only safety critical items given by the semantic context of the scene, the map trust is not negatively impacted by irrelevant map items.

In a further advantageous embodiment the safety-critical map items are defined as a context-dependent subset of map items being selected based on the localization pose of the vehicle on the digital map, and the intended behavior of the vehicle.

In a further advantageous embodiment calculating the probability further comprises that a total probability for the correctness of the digtal map is calculated from partial probabilities of the individual safety-critical map items.

In a further advantageous embodiment a weighting is performed by assigning individual weight factors to the individual safety-critical map items.

In a further advantageous embodiment the total probability is calculated using a Bayesian network.

In a further advantageous embodiment the method further comrprising:

- utilizing the digital map during an automated drive of the vehicle;
- comparing the computed probability with a predefined threshold value; and
- controlling the automated driving function based on the result of the comparison.

In a further advantageous embodiment, the automated driving function is continued when the probability exceeds the predefined threshold value and/or is disengaged when the probability falls below the predefined threshold value. Further, the automated driving function may choose trajectories travelling through map areas with an higher probability of being correct.

According to another aspect, a system for evaluating a digital map onboard of a vehicle comprises:

- a sensor for generating sensor data representing the vehicle environment;
- a storage component for storing map data;
- a map deviation detection component which receives input both sensor data from said sensor and map data from said storage component, analyses the sensor data and the map data for deviations between the sensor data and the map data, and determines for at least one map item an evaluation state based on the result of the analysis; and
- a safety evaluation component for calculating a probability that the digital map correctly represents real-world objects in the vehicle environment based on the evaluation state.

In an advantageous embodiment, the system further comprises a context classification component which classifies the current region of the digital map, in which the vehicle is located, based on the localization pose of the vehicle on the digital map and the intended behavior of the vehicle into a semantic context of a predefined set of contexts and selects depending on the semantic context at least one safety-critical map item relevant for safe completion of the vehicle's intended behavior.

According to another aspect, a vehicle is configured to perform a method according to the invention or comprises a sensor for generating sensor data representing the vehicle environment, a storage component for storing map data and a system according to the invention. The vehicle may be any type of vehicle, e.g., a car, a bus, a motorcycle, a commercial vehicle, in particular a truck, an agricultural machinery, a construction machinery, a rail vehicle, etc. In particular, the invention can be used in any kind of an automated vehicle, which is able to at least partly drive without any human interaction. Applying the present invention within an automated vehicle may increase the safety of the driving function, as driving based upon false map assumptions may be prevented.

Further features of the present invention will become apparent from the following description and the appended claims in conjunction with the figures.

Fig. 1    schematically illustrates the basics steps of the inventive method for performing a safety evaluation of an input map;

Fig. 2    schematically illustrates a block diagram with the basic components of an inventive system;

Fig. 3    schematically illustrates a vehicle with an environment surrounding the vehicle with safety critical map items;

Fig. 4    schematically illustrates an exemplary embodiment of a Bayesian network computing the map trust value, considering one visible verification and one visible deletion; and

Fig. 5    schematically illustrates a vehicle with units for carrying out the method according to the invention and a map item detected by a sensor of the vehicle.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided by dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

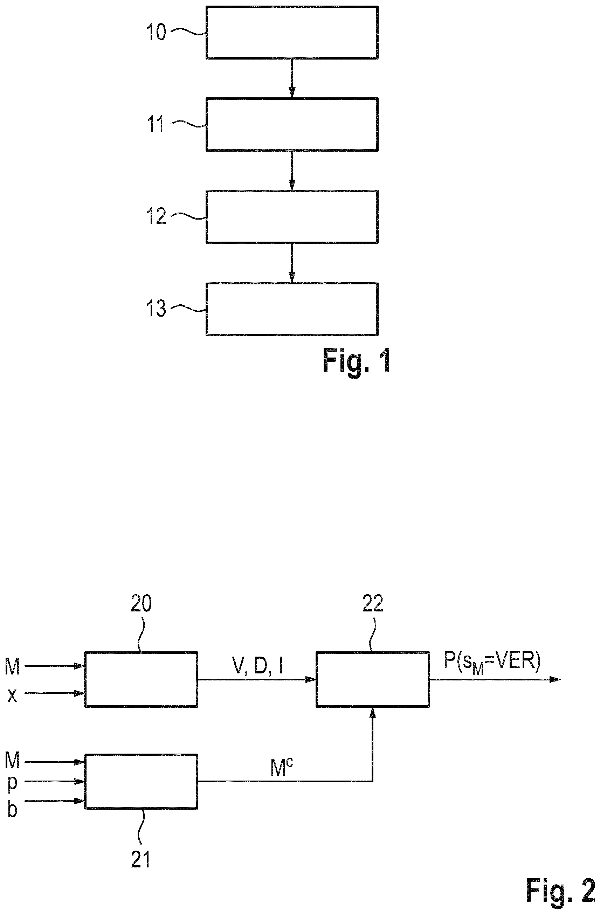

Figure 1 shows the basics steps of the method according to the invention for performing a safety evaluation of a map $\mathcal{M}$ while driving. The method is performed by a system implemented in a vehicle which contains sensors that perceive the environment around the vehicle, in the following also referred to as ego vehicle. Accordingly, the current lane of the vehicle is referred to in the following also as ego lane.

In a first step 10 sensor data x representing a vehicle environment of the vehicle are received from one or more sensors implemented in the vehicle. The sensor data may be image data of the vehicle's surroundings such as camera images provided by one or more video or still image cameras of the vehicle or point cloud data generated by a LiDAR sensor of the vehicle. Instead or in addition, sensor data may also be provided by one or more RADAR sensors, ultrasonic sensors, or any other type of sensor that provide data representing the vehicle's surroundings.

In step 11 map data of a digital map $\mathcal{M}$ stored in the vehicle are received. Map $\mathcal{M}$ comprises high-definition (HD) map data which provides the vehicle with information relevant for automatic driving subsystems, for example trajectory planning, and is presumably deviating from the real world environment of the vehicle.

In particular, the map $\mathcal{M} = \mathcal{E} \cup \mathcal{R}$ contains map items $m$ comprising a set of map elements $\varepsilon$ and a set of map rules $\mathcal{R}$. Examples of map elements $\varepsilon$ are traffic signs, traffic lights, lanes, and road markings, examples of map rules $\mathcal{R}$ are tempo limit, right of way, etc..The map rules $\mathcal{R}$ are imposed on the automated vehicle by element attributes, e.g., tempo limit "50", and relations between elements, e.g., an association between a sign and multiple lanes.

A presumably deviating map $\mathcal{M} = V \cup D \cup I \cup S$ may comprise map items correctly representing real-world objects, which correspond to a set of verifications V. Furthermore, there may be real-world objects in the vehicle environment which are missing in the map, corresponding to a set of deletions D from a real-world perspective, map items falsely existing in the map, corresponding to a set of insertions I, and interchanged items, for instance a sign interchanged with a traffic light, corresponding to a set of substitutions S.

In the proposed method, substitutions are decomposed into respective insertions and deletions. For instance, a single sign to light substitution becomes a sign insertion (map falsely containing a sign) and a light deletion (map falsely missing a light). This leaves three possible evaluation states $s_m$ for a map item $m$ of map $\mathcal{M}$: verified (verification VER),

falsified (insertion INS), or missing (deletion DEL). Hereby, verifications and insertions are interlinked: If an existing map item is not verified, it is an insertion. Missing elements may occur independently from any existing map hypothesis.

In the following step 12, the sensor data *x* and the map data are analysed for deviations between the sensor data and the map data and an evaluation state is determined for at least one map item based on the result of the analysis. Finally, a probability that the digital map correctly represents real-world objects in the vehicle environment is calculated in step 13 based on the determined evaluation state.

In the above, the step 10 of receiving the sensor data was performed before the step 11 of receiving the map data. However, the two steps can also be carried out in reverse order or simultaneously. For the subsequent map deviation detection and safety evaluation steps details are described in the following based on figure 2 which schematically illustrates a block diagram of a system for performing a safety evaluation of an input map according to the invention.

In figure 2, a map deviation detection (MDD) component 20 receives both the presumably deviating map $\mathcal{M}$ and current sensor data *x* as input. Map $\mathcal{M}$ may be provided from a memory or storage device used by a navigation and/or path planning modul of the vehicle. However, the Map $\mathcal{M}$ may also be received from a mapping server via a wireless communication modul, e.g. a LTE modem, of the vehicle. As mentioned above, the sensor data may be provided by one or more cameras, LiDAR sensors, RADAR sensors, ultrasonic sensors, or any other type of sensors of the vehicle that provide data representing the vehicle's surroundings.

Based on the input, the MDD component 20 infers the evaluation state (verified, falsified, missing) of the possible map items. However, as the inventors realized, the MDD component 20 will always feature an imperfect performance, and may fail to verify items (false negative verifications), or falsely verifies items (false positive verifications). Similarly, also missing elements (deletions), may be undetected (false negative deletions), or falsely detected (false positive deletions).

The safety evaluation component 22 accounts for such an imperfect performance, in order to deduce whether or not it is safe to drive based on the current evaluation status of the map items. For example, the performance of the MDD component 20 may depend on environmental conditions such as the current weather conditions at the vehicle location. E.g., bad weather conditions may result in a decreased performance of the vehicle sensor system. Similarly, occlusion effects may occur so that parts of the map corresponding to the environment cannot be detected by the vehicle sensor system and therefore cannot be verified.

However, the dependency on such environmental conditions can be determined in advance, so that this can be taken into account by the safety evaluation component. For this purpose, the safety evaluation component 22 considers the evaluation states of map items and computes a map trust value $P(s_{\mathcal{M}} = \text{VER})$, which is the probability of the map correctly representing the real world. If the map trust value exceeds a specific threshold value, the map is considered a safe input to the automatic driving function or other subsystems. Such a probability and the selection of threshold values may also allow for a risk analysis: Trusting the map with a map trust value lower than 1.0 may cause disengagements of the automatic driving function, or even accidents.

However, not all map items in proximity of the ego vehicle are relevant to its safe operation at all times. In fact, different semantic contexts exist, which depend both on the stationary environment of the vehicle and on its intended behavior. For instance, when the vehicle intends to drive straight on an urban highway, driving safely in the context "driving straight on an urban highway" requires only the verification of a subset of items relevant to the intended behavior, e.g., verifying the course of the ego lane and the tempo limit, whereas "turning right in an urban crossing" additionally requires the verification of the right of way in that specific crossing.

Prior to driving, a set of known contexts may be defined, based on the vehicles capabilities and its operational design domain, e.g., inner city and good weather conditions. While driving, a context classification component 21 may define a subset of "critical" map items $\mathcal{M}^c$ relevant for safe completion of the vehicle's intended behavior in a given context. To this end, the context classification considers the map $\mathcal{M}$, the localization pose *p* on the map, and the intended behavior $b \in \mathcal{B}$ as input, with $\mathcal{B}$ being the set of possible behaviors. Besides, the proposed overall system may additionally communicate with the driving function to identify the safest behavior, given different possible behaviors *b* in a given context. Here, the safest behavior corresponds to the behavior with the highest trust in the map. The set of safety critical map items $\mathcal{M}^c$ may differ between such intended behaviors, whereby each different set $\mathcal{M}^c$ may obtain different map trust values. In that case, the behavior *b* providing the highest map trust is selected. In the following, properties of the MDD component relevant for its integration in the inventive system for map safety evaluation are described.

Map Deviation Detection (MDD) Component

To consider a map element as verified, its existence in terms of the respective major type at a specific location must be verified, wherein the major type is assigned to map elements to allow differentiation and may comprise types or classes such as "sign", "light", or "pole". Furthermore, also deviations regarding the map element's attributes, e.g., the orientation of the map element, must be lower than specific threshold values.

Given the verification of the map elements, the MDD component is then able to establish relations between the map elements (e.g., light to lane association) to evaluate the set of rules $\mathcal{R}$ provided by $\mathcal{M}$ regarding respective evaluation states. Thus, for each map item $m \in \mathcal{M}$, the MDD component classifies its evaluation state: verification VER ("verified"), insertion INS ("falsified"), or deletion DEL ("missing"), providing the respective set of verifications $V$, set of insertions $I$, and set of deletions D. To implement the classifier of the MDD component, various algorithms may be considered, e.g., rule-based or employing machine learning.

Context Classification Component

The context classification component classifies the current map region, in which the ego vehicle is located, into a semantic context $c \in C$, with $C$ being a predefined set of contexts. Further, a context may in turn define a set of safety critical map items $\mathcal{M}^c \subset \mathcal{M}$, which differs depending on the specific stationary environment surrounding the vehicle (represented by the possibly deviating map $\mathcal{M}$) and the vehicle's intended behavior $b$. If necessary, also the intended behavior of other road participants may be considered for context classification.

Examples for possible contexts may include:

- c = Urban crossing (multi-lane), $b$ = driving straight
- c = Urban crossing (multi-lane), $b$ = turning right
- c = Urban highway (multi-lane): $b$ = driving straight

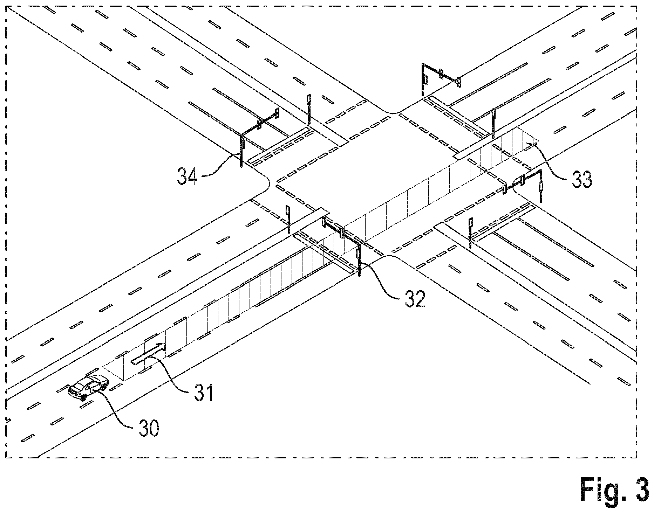

Figure 3 schematically illustrates an example with an ego vehicle 30 in an urban crossing with multiple lanes as context c and intended behavior $b$ = driving straight, indicated by an arrow 31 representing the driving direction. There are a number of map items in the area of the intersection, such as lanes, lane markings and traffic lights. However, only some of these map items are safety-critical for the intended straight-ahead driving, such as the traffic lights 32 relevant for the vehicle when approaching the intersection and the lane 33 currently being traveled on by the ego vehicle. In addition, the map section corresponding to the intersection also contains several map items that are not safety-relevant for the intended behavior of the ego vehicle, such as the traffic lights 34 for the lanes crossing the intersection perpendicular to the lane traveled by the ego vehicle.

Generally, the subset of safety critical map items $\mathcal{M}^c$ may include items that impose the following minimum set of rules to enable a safe operation of the driving function:

1. Course of the ego lane (and adjacent lanes, if lane changes are required)
2. Stopping points (including pedestrian crosswalks)
3. Right of way
4. Tempo limit

Given a context, the specific set of critical items $\mathcal{M}^c$ depends on the stationary environment of the vehicle. For instance, to verify the rule "course of the ego lane", the set of critical items may comprise markings, guideboards, curbs, etc., while "stopping points" require the verification of stop markings and associated traffic lights or traffic signs.

Safety Evaluation Component

The safety evaluation component 22 relies on a probabilistic method that may comprise the application of Bayesian networks. In particular, given the defined set of safety critical items $\mathcal{M}^c$ that apply in a specific context c with the intended behavior $b$, and the results regarding the evaluation states of these items provided by the MDD component, the safety evaluation computes the previously defined map trust value $P(s_{\mathcal{M}} = \text{VER})$, which is the overall probability of the safety critical parts of the map $\mathcal{M}^c$ correctly representing the real world (the map $\mathcal{M}$ is "verified").

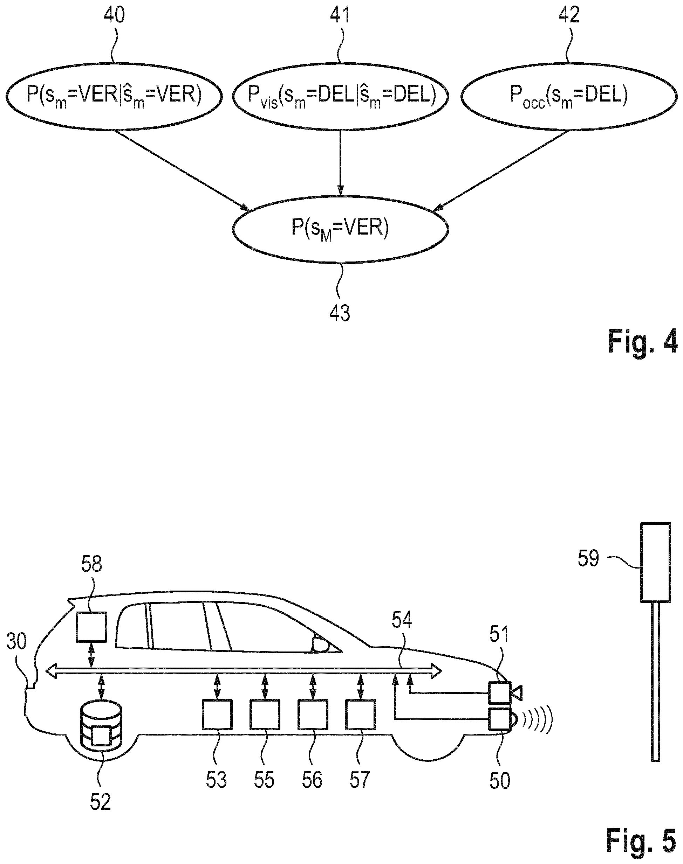

Figure 4 shows a graphic model for an exemplary embodiment of a Bayesian network computing the map trust, considering one visible verification and one visible deletion. The three parent nodes 40, 41 and 42 represent different probabilities contributing to the calculation of the map trust, each connected via an edge representing the respective conditional dependencies, with the child node 43 representing the map trust value $P(s_{\mathcal{M}} = \text{VER})$.

It is important to note here that the Bayesian network depends on the specific number of visible and occluded map items for a given context and behavior. Thus, the actual instance of the Bayesian network may change constantly while driving - with nodes being added and removed.

The following describes the computation of the necessary inputs and outputs. The actual embodiment of the Bayesian network may differ from the one provided in figure 4. To compute the map trust, only the set of safety critical map items $\mathcal{M}^c$ is considered.

To compute the map trust, two cases are distinguished: items with an underlying existing map hypothesis (verified or falsified), and elements missing in the map (deletions). Both cases are further split into visible and unseen (therefore unmeasured) items to account for occlusion. The map trust $P(s_{\mathcal{M}} = \text{VER})$ may comprise the following factors (assuming all visible critical items are classified as VER):

$$P(s_{\mathcal{M}} = \text{VER}) = \prod_{m \in \mathcal{M}^{\text{vis}}} P_{\text{vis}}(s_m = \text{VER} \mid \hat{s}_m = \text{VER}) \cdot \prod_{m \in \mathcal{M}^{\text{occ}}} P_{\text{occ}}(s_m = \text{VER})$$

$$\cdot \prod_{m \in \mathcal{M}^{\text{vis}}} P_{\text{vis}}(s_m = \text{DEL} \mid \hat{s}_m = \text{DEL})$$

$$\cdot (1 - P_{\text{vis}}(s = \text{DEL} \mid \hat{s} = \text{NONE})) \cdot (1 - P_{\text{occ}}(s = \text{DEL})),$$

with $\mathcal{M}^{\text{vis}} \subset \mathcal{M}^c$ being the visible items with a prior hypothsis, $s_m$ being the (unknown) true evaluation state of a map item m, $\hat{s}_m$ being the (possibly falsely) predicted evaluation state by the MDD component.

The probabilities $P_{\text{vis}}(\cdot)$ and $P_{\text{occ}}(\cdot)$ are defined as follows:

- $P_{vis}(s_m = \text{VER} \mid \hat{s}_m = \text{VER})$ being the probability of a visible map item m correctly representing the real world,
- $P_{occ}(s_m = \text{VER})$ being the probability that a unseen, fully occluded, and therefore unevaluated map item m correctly represents the real world,
- $P_{vis}(s_m = \text{DEL} \mid \hat{s}_m = \text{DEL})$ being the probability that a predicted (critical) deletion m actually exists,
- $P_{vis}(s = \text{DEL} \mid \hat{s} = \text{NONE})$ being the probability that a criticial deletion is visible but is left undetected by the MDD component, and
- $P_{occ}(s = \text{DEL})$ being the probability of a critical deletion existing in a fully occluded area, for which no predictions can be provided by the MDD compoment due to missing sensor data.

$P_{vis}(s_m = \text{VER} \mid \hat{s}_m = \text{VER})$ describes the probability of the map item $m$ correctly representing the real world (a true verification), given that the item is (possibly mistakenly) predicted as verification. This probability may be derived from the MDD components performance metrics comprising recall, false positive rate (FPR), and true negative rate (TNR) using Bayes' Theorem as follows (with INS being "not VER"):

$$P_{\text{vis}}(s_m = \text{VER} \mid \hat{s}_m = \text{VER}) = \frac{P(\hat{s}_m = \text{VER} \mid s_m = \text{VER}) \cdot P(s_m = \text{VER})}{P(\hat{s}_m = \text{VER})}$$

$$P(\hat{s}_m = \text{VER}) = P(\hat{s}_m = \text{VER} \mid s_m = \text{VER}) \cdot P(s_m = \text{VER}) + P(\hat{s}_m = \text{VER} \mid s_m = \text{INS}) \cdot P(s_m = \text{INS})$$

$$\text{recall}(\text{VER}) = P(\hat{s}_m = \text{VER} \mid s_m = \text{VER})$$

$$\text{FPR}(\text{VER}) = P(\hat{s}_m = \text{VER} \mid s_m = \text{INS}) = 1 - \text{TNR}(\text{VER}) = 1 - P(\hat{s}_m = \text{INS} \mid s_m = \text{INS})$$

$$P(s_m = \text{INS}) = 1 - P(s_m = \text{VER})$$

$$P_{\text{vis}}(s_m = \text{VER} \mid \hat{s}_m = \text{VER}) = \frac{\text{recall}(\text{VER}) \cdot P(s_m = \text{VER})}{\text{recall}(\text{VER}) \cdot P(s_m = \text{VER}) + \text{FPR}(\text{VER}) \cdot P(s_m = \text{INS})}$$

The state prior probabilities $P(s_m = \text{VER})$ and $P(s_m = \text{INS})$ indicate the probability of the map being correct at any given time, without any underlying measurement. Both probabilities may be derived from the frequency of construction sites in specific areas or may be learned from real world data, e.g., using an onboard MDD component to transmit detected deviations to an external server (e.g., to compute map updates). In particular, the performance metrics recall(VER) and FPR(VER) of the MDD component depend on the quality of sensor data, and on environment conditions such as weather and partial occlusions. Thus, including these performance metrics into the map trust estimations models the influence of both environmental conditions on the map trust.

The probability $P_{occ}(s_m = \text{VER})$ accounts for fully occluded map items with a prior hypothesis that could not be verified by the MDD component. For these cases, the state prior probability $P(s_m = \text{VER})$, derived using the aforementioned methods, may be considered. Also, the Bayesian network may be instanced with conditional probabilities between map items, representing interdependencies. For instance, if some visible map items are predicted as verified (or falsified), this impacts the verification probabilities of occluded map items. For example, a visible and verified traffic light increases the verification probability of a stop line that is occluded by another vehicle. Such conditional probabilities may be context specific and be learned from transmitted onboard data, similar to $P(s_m = \text{VER})$.

$P_{vis}(s_m = \text{DEL} \mid \hat{s}_m = \text{DEL})$ describes the probability that a visible, detected deletion (item missing in the map data) actually exists in the real world (being a true positive detection). For the probability to contribute positively to the map trust, such deletion must comply semantically with the context. If such deletion is not compliant semantically (e.g., a stop sign newly detected right in front of a yield sign), the driving function may disengage, or, if the deletion is predicted with a low certainty, it may be filtered out before the integration into the Bayesian network. For instance, if the "tempo limit" rule is already verified, and another sign imposing a tempo limit is detected close by as deletion, such a deletion may be classified as false positive and may be discarded. Alternatively, such incompliant deletions may be integrated into the map trust as 1 - $P_{vis}(s_m = \text{DEL} \mid \hat{s}_m = \text{DEL})$, which may allow for the a continued operation, if other items are highly trusted. The derivation using the MDD performance indicators is analogous to $P_{vis}(s_m = \text{VER} \mid \hat{s}_m = \text{VER})$, with the deletion prior $P(s_m = \text{DEL})$ being the probability of map items missing in the map (e.g., due to construction sites).

$P_{vis}(s = \text{DEL} \mid \hat{s} = \text{NONE})$ describes the probability that a safety critical map item exists that is visible but is left undetected ($\hat{s} = \text{NONE}$) by the MDD component, which is computed analogous to $P_{vis}(s_m = \text{DEL} \mid \hat{s}_m = \text{DEL})$ using the performance metrics of the MDD component. The prior deletion probability $P(s = \text{DEL})$ in this case may be connected to other map items via conditional probabilities: If safety critical items are verified, this decreases the probability of missed critical deletions $P(s = \text{DEL})$. Alternatively, if safety critical items are verified, the occurrence of specific related deletions imposing the same rule can be exruled. For instance, if the tempo limit rule is verified, another sign imposing such limit in close proximity can be exruled. Thus, $P(s = \text{DEL})$ may be considered as a sum of probabilities regarding the occurrence probability of possible safety critical deletions, whereby the number of possible critical deletions varies on context and behavior. If some critical deletions can be logically exruled, respective probabilities may be set to zero.

Last, 1 - $P_{occ}(s = \text{DEL})$ accounts for possible undetected deletions due to occlusion. To estimate this probability, the deletion prior probability $P(s = \text{DEL})$ may be utilized. Moreover, this probability may be scaled by using the factor $A^{occ}/A^{critical}$, with $A^{occ}$ being the occluded part of the critical area $A^{critical}$. Hereby, the critical area is given by the area of a given context in which safety critical map items may occur. The respective area differs by the actual instance of the scene given by the stationary environment of the vehicle. However, as map items can be placed only in certain areas (e.g., the road side), $A^{critical}$ may be calculated from an according set of rules.

Moreover, if one or more critical map items have been falsified by the MDD component and the map cannot be safely trusted, multiple variants may be considered to handle this case. First, such estimations may be integrated into the Bayesian network as $P_{vis}(s_m = \text{INS} \mid \hat{s}_m = \text{INS})$, which accounts for the possible classification errors of the MDD component - allowing to discard such possibly false falsifications. Also in this case, conditional probabilities between items may be considered to model the influence of predicted falsifications to other map items as aforementioned. For instance, if the existence of traffic lights are falsified, the verification probability of the stop line is negatively influenced. Second, a predicted insertion (or falsification, respectively) may be considered as trigger condition to disengage the driving function.

The invention is not limited to the above system but encompasses further embodiments and modifications.

In one embodiment, a weighing of safety critical map items or the safety critical rules map is considered in the form of weight factors assigned to the factors contributing to the map trust.

In a further embodiment, considering the usage of the map trust while driving, a threshold may be applied to decide whether the vehicle continues its automated operation or disengages. Specifically, if the threshold is exceeded, operation may continue and vice versa. Thereby, each factor contributing to the map trust may be considered separately with thresholds applied to each factor in order to decide for a possible disengagement. Also, using disengagement decision thresholds in combination with the map trust or its factors enables the computation of risk in terms of disengagements or safety critical hazards per year per vehicle, when considering potential hazardous scenarios in which map deviations are the root cause of a hazard.

In a further embodiment, the information on the map trust, which may differ between map areas in general or specific lanes in particular, may be incorporated as input to the trajectory planning subsystem. Specifically, the trajectory planning subsystem may choose to plan a trajectory through map areas (or lanes, in particular) that feature a higher map trust than other map areas (or lanes).

In another embodiment,, the history of estimations may be considered in order to stabilize the map trust temporally, e.g., based on a running, weighted average of factors or based on Bayesian considerations.

Figure 5 schematically illustrates a vehicle 30 according to the invention. The vehicle 30 has various units for carrying out the method according to the invention. Various environment sensors are provided in the vehicle, with which the vehicle environment can be detected for the automated driving function. In the present example, for the sake of simplicity, only a forward-facing RADAR sensor 50 and a front camera 51 are shown, both detecting a map item 59. However, the vehicle can have a large number of other sensors for which the method according to the invention can be used. These can, for example, also detect the area to the side or rear of the vehicle. Various sensor technologies can be used.

A storage unit 52 is also provided in the vehicle. The storage unit can have both volatile and non-volatile memory areas and can be implemented in a wide variety of memory devices and memory media. The HD map data is stored in the storage unit 52 . Furthermore, the measured sensor data can be temporarily stored in the storage unit. Finally, instructions for executing a program that implements the method according to the invention on the vehicle side can be stored.

When driving through a map area with map items, at least one of the sensors detects map item 59 and the corresponding map data and sensor data are fed to an evaluation and control unit 53 via a digital data bus 54 in the vehicle. The evaluation and control unit 53 can be part of a central control unit, for example, and can have one or more microcontrollers or microprocessors. The raw data supplied by the sensors is then evaluated in the evaluation and control unit 53. In particular, the evaluation and control unit 53 includes the system for an onboard safety evaluation of HD maps described above, in which deviations between the map data and the sensor data are evaluated. In addition to the detection of map deviations and the inventive safety evaluation of the HD map, the evaluation and control unit 53 may also include an environment modeling unit, which is used for trajectory planning and localization of the vehicle.

The vehicle is roughly localized using a position detection unit 55, which evaluates GPS signals, for example. Furthermore, in connection with the HD map data and a sensor-supported detection of map items in the vehicle environment, the accuracy of the detected position data is further increased. For this purpose, for example, the image or video data generated by the front camera 51 can be fed to the evaluation and control unit 53, which evaluates the image data in order to identify the map items in the vehicle environment using suitable image processing methods. Furthermore, for route calculation and guidance a navigation unit 56 is provided, which uses road information in the digital map data as well as the current position data of the vehicle.

The vehicle also has an assistance unit 57 which provides assistance functions such as automatic longitudinal and lateral guidance for an automatic driving function of the vehicle and, for this purpose, makes use of the sensor data generated by radar sensor 50 and front camera 51 and the map data of the HD map.

Finally, a communication unit 58 is provided in the vehicle, with which data can be exchanged with an external server, for example, for receiving map data from a mapping server or transmitting map deviations detected by the vehicle to the mapping server for map updates. Furthermore, the communication unit 58 can also be used for data exchange with objects in the vehicle environment. The data transmission can be based on a mobile radio standard, such as 4G or 5G, or a wireless local area network, such as WLAN.

**Reference signs**

| 10 | Receiving step |
| 11 | Receiving step |
| 12 | Analysing and determining step |
| 13 | Calculating step |
| 20 | Map Deviation Detection component |
| 21 | Context Classification component |
| 22 | Safety Evaluation component |
| 30 | Vehicle |
| 31 | Intended behavior (driving straight). |
| 32, 33 | Safety critical map items |
| 34 | Safety non-critical map items |
| 40, 41, 42 | Parent nodes of Bayesian network |

| 43 | Child node of Bayesian network |
| 50 | RADAR sensor |
| 51 | Camera |
| 52 | Storage unit |
| 53 | Evaluation and control unit |
| 54 | Digital data bus |
| 55 | Position detection unit |
| 56 | Navigation unit |
| 57 | Assistance unit |
| 58 | Communication unit |
| 59 | Map item |

**Claims**

1.  Method for evaluating a digital map onboard of a vehicle, comprising:

    receiving (10), from a sensor (50, 51) implemented in the vehicle (30), sensor data representing a vehicle environment of the vehicle;
    receiving (11) map data of a digital map stored in the vehicle;
    analysing (12) the sensor data and the map data for deviations between the sensor data and the map data;
    determining (12) for at least one map item an evaluation state based on the result of the analysis; and
    calculating (13) a probability that the digital map correctly represents real-world objects in the vehicle environment based on the evaluation state.

2.  The method according to claim 1, wherein determining (12) the evaluation state comprises a classification into one of three possible evaluation states for the at least one map item.

3.  The method according to claim 1, wherein the possible evaluation states correspond to

    - a verified state in case a map item correctly represents a corresponding real-world object in the vehicle environment;
    - a falsified state in case a map item does not correctly represent a corresponding real-world object in the vehicle environment; and
    - a missing state in case no map item exists in the map for a real-world object in the vehicle environment.

4.  The method according to any of claims 1 to 3, wherein the deviations result from one or more of an impaired detection of the real-world objects in the vehicle environment by the sensor (50, 51) implemented in the vehicle or an imperfect performance of an algorithm for analysing the sensor data and the map data for deviations.

5.  The method according to claim 4, wherein the impaired detection of the real-world objects in the vehicle environment results from an occlusion of the real-world objects or weather conditions negatively influencing the performance of the sensor (50, 51).

6.  The method according to any of claims 1 to 5, wherein a map trust value is determined based on the probability that safety-critical map items relevant for safe completion of the vehicle's intended behavior have been correctly verified.

7.  The method according to claim 6, wherein the safety-critical map items are defined as a context-dependent subset of map items being selected based on the localization pose of the vehicle on the digital map, and the intended behavior of the vehicle.

8.  The method according to claim 6 or 7, wherein calculating the probability further comprises that a total probability for the correctness of the digtal map is calculated from partial probabilities of the individual safety-critical map items.

9.  The method according to claim 8, wherein a weighting is performed by assigning individual weight factors to the individual safety-critical map items.

10. The method according to claim 8 or 9, wherein the total probability is calculated using a Bayesian network.

11. The method according to any of claims 1 to 10, further comrprising:

   - utilizing the digital map during an automated drive of the vehicle;
   - comparing the computed probability with a predefined threshold value; and
   - controlling the automated driving function based on the result of the comparison.

12. The method according to claim 11, wherein the automated driving function is continued when the probability exceeds the predefined threshold value and/or is disengaged when the probability falls below the predefined threshold value.

13. System for evaluating a digital map onboard of a vehicle, comprising:

   - a map deviation detection component (20) which receives input sensor data from a sensor (50, 51) implemented in the vehicle (30), said sensor data representing a vehicle environment of the vehicle, and map data of a digital map from a storage component in the vehicle, analyses the sensor data and the map data for deviations between the sensor data and the map data, and determines for at least one map item an evaluation state based on the result of the analysis; and
   - a safety evaluation component (22) for calculating a probability that the digital map correctly represents real-world objects in the vehicle environment based on the evaluation state.

14. System according to claim 13, further comprising a context classification component (21) which classifies the current region of the digital map, in which the vehicle is located, based on the localization pose of the vehicle on the digital map and the intended behavior of the vehicle into a semantic context of a predefined set of contexts and selects depending on the semantic context at least one safety-critical map item relevant for safe completion of the vehicle's intended behavior.

15. A vehicle (30), wherein the vehicle is configured to perform a method according to any of claims 1 to 12 or comprises a sensor (50, 51) for generating sensor data representing the vehicle environment, a storage component (52) for storing map data and a system according to claim 13 or 14.

Fig. 1

Fig. 2

Fig. 3

40
$P(s_m = VER | \hat{s}_m = VER)$

41
$P_{vis}(s_m = DEL | \hat{s}_m = DEL)$

42
$P_{occ}(s_m = DEL)$

$P(s_M = VER)$

43

**Fig. 4**

58

30

54

51

52

53  55  56  57

50

59

**Fig. 5**

**EP 4 517 261 A1**

**EUROPEAN SEARCH REPORT**

Application Number

EP 23 19 4404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/073360 A1 (HERE GLOBAL BV [NL]; HERE NORTH AMERICA LLC [US]) 18 April 2019 (2019-04-18) * paragraphs [0021] - [0028]; figure 1 * | 1-15 | INV. G01C21/00 |
| X | WO 2022/216660 A1 (ZOOX INC [US]) 13 October 2022 (2022-10-13) * paragraphs [0018] - [0021], [0031] - [0034], [0048], [0065] - [0069]; figure 1 * | 1-15 | |
| A | Fabris Andrea: "Map Validation for Autonomous Driving Systems", , 7 January 2020 (2020-01-07), pages 1-101, XP093125023, Master'sThesis in Automation Engineering, Padova Retrieved from the Internet: URL:https://thesis.unipd.it/handle/20.500.12608/22888 [retrieved on 2024-01-29] * page 16 - page 22; figure 3.3 * | 1-15 | |

TECHNICAL FIELDS
SEARCHED (IPC)

G01C
G06V

The present search report has been drawn up for all claims

| Place of search | Date of completion of the search | Examiner |
|---|---|---|
| The Hague | 12 February 2024 | Asthalter, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

**EP 23 19 4404**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-02-2024**

| Patent document cited in search report | Publication date | Patent family member(s) | | Publication date |
|---|---|---|---|---|
| WO 2019073360 A1 | 18-04-2019 | CN | 111279153 A | 12-06-2020 |
| | | EP | 3673237 A1 | 01-07-2020 |
| | | US | 2019107836 A1 | 11-04-2019 |
| | | US | 2020073386 A1 | 05-03-2020 |
| | | WO | 2019073360 A1 | 18-04-2019 |
| WO 2022216660 A1 | 13-10-2022 | US | 2022326023 A1 | 13-10-2022 |
| | | WO | 2022216660 A1 | 13-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022096236 A1